# EUROPEAN PATENT SPECIFICATION

(11) **EP 4 166 267 B1**
(45) Date of publication and mention of the grant of the patent: **12.11.2025**
(21) Application number: 22193955.6
(22) Date of filing: 05.09.2022
(51) Int. Cl.: B23K 9/127, B23K 9/02, B23K 9/095

(54) **WELDING LINE DETECTION SYSTEM**
SCHWEISSNAHTDETEKTIONSSYSTEM
SYSTÈME DE DÉTECTION DE LIGNE DE SOUDAGE

(30) Priority: 24.09.2021 JP 2021154990; 07.07.2022 JP 2022109708
(43) Date of publication of application: 19.04.2023
(73) Proprietor: DAIHEN Corporation, Osaka-shi, Osaka 532-8512 (JP)
(72) Inventor: NAKAGAWA, Shinichiro, Osaka-shi, Osaka (JP)
(74) Representative: Manitz Finsterwald Patent- und Rechtsanwaltspartnerschaft mbB

(56) References cited:
- KR-A- 20200 078 840
- US-A1- 2010 152 870

## Description

The present invention relates to a welding line detection system.

Patent Publication JP-A-2019-150930 discloses an operation teaching system in which an operation is taught to a welding robot. In the operation teaching system, when the operation is taught, a welding torch located in a hand end portion of a manipulator is replaced with a photographing unit. Then, on the basis of each of position information of portions to be welded, which is generated on the basis of an image photographed by the photographing unit, and position and posture information of the manipulator when the image is photographed, trajectories of the position and posture of the manipulator required to weld the portions to be welded are generated, and the trajectories in the individual portions to be welded are combined together, thereby generating teaching data.

In the operation teaching system disclosed in Patent Publication JP-A-2019-150930, before the operation is to be taught, work is performed to draw, on an object to be welded, lines (welding lines) indicating the portions to be welded for which trajectories are to be generated when the operation is taught. This work is performed by a worker by drawing the welding lines with a pen on the object to be welded. Thus, the work requires a laborious operation, and, in addition, the lines drawn with the pen may remain on a surface of the object to be welded. A welding line detection system in accordance with the preamble of claim 1 is known from US 2010/152870 A1. A related welding line detection system is described in KR 2020 0078840 A.

It is therefore an object of the present invention to provide a welding line detection system that can increase efficiency of work to teach an operation to a welding robot and improve a welding quality.

The invention is defined by independent claim 1. A welding line detection system according to an aspect of the present invention includes: a photographing terminal that photographs an image of an object to be welded; a coordinate system setting unit that sets a user coordinate system based on a marker included in the photographed image; a point-group-data plotting unit that detects a specific position of the marker on the basis of the image, sets the detected specific position on point group data acquired by a distance measurement sensor that measures a distance to the object to be welded, and plots, in the user coordinate system, the point group data to which coordinates in the user coordinate system, using the set specific position as an origin, are given; and a welding line detection unit that detects, on the basis of the point group data plotted in the user coordinate system, a welding line of the object to be welded.

According to this aspect, it is possible to detect the specific position of the marker on the basis of an image obtained by photographing the object to be welded and the marker, set the detected specific position of the marker on the point group data, plot, on the image, the point group data to which the coordinates in the user coordinate system using the set specific position of the marker as the origin are given, and detect the welding line of the object to be welded on the basis of the point group data. Therefore, even when the worker does not draw the welding line on the object to be welded, it is possible to allow the welding line of the object to be welded to be recognized.

In the above aspect, it may be possible that the welding line detection unit recognizes, on the basis of the point group data, a plurality of surfaces corresponding to the object to be welded, and detects, as the welding line, a line of intersection between two surfaces included in the plurality of surfaces.

According to this aspect, it is possible to detect, as the welding line, the line of intersection between the two surfaces included in the surfaces represented by the point group data plotted in the user coordinate system, and improve accuracy of the detection of the welding line.

In the above aspect, it may be possible that the welding line detection unit detects, as the welding line, at least a portion of the line of intersection between the two surfaces.

According to this aspect, it is possible to detect at least the portion of the line of intersection between the two surfaces, and detect all of candidates for the welding line.

In the above aspect, it may be possible that the welding line detection system further includes: a program production unit that produces a work program for performing welding on the basis of the welding line detected by the welding line detection unit.

According to this aspect, the work program for performing welding on the basis of the detected welding line can be produced. Therefore, when the welding is to be performed, it is possible to efficiently perform the welding along the welding line specified by the work program.

In the above aspect, it may be possible that the marker is an AR marker.

According to this aspect, it is possible to activate a program to cause, when the AR marker is recognized, the user coordinate system using a position of the AR marker as the origin to be displayed in superimposed relation on a real screen image.

In the above aspect, the photographing terminal includes: an image sensor that photographs the image; and the distance measurement sensor.

According to this aspect, it is possible to fix a positional relationship between the image sensor and the distance measurement sensor and allow the individual sensors to acquire data with the same timing.

In the above aspect, the photographing terminal further includes: a display unit that displays the image; and a control unit that controls a content to be displayed on the display unit, and the control unit causes the display unit to display the welding line detected by the welding line detection unit, with the welding line being superimposed on the image.

According to the aspect, it is possible to allow the worker who operates the photographing terminal to easily determine whether or not there is an undetected welding line, while viewing the display unit of the photographing terminal.

According to the present invention, it is possible to provide a welding line detection system that can increase efficiency of work to teach an operation to a welding robot and improve a welding quality.

### Brief Description of Drawings

FIG. 1 is a diagram illustrating an example of a configuration of a welding robot system including a welding line detection system according to an embodiment;
FIG. 2 is a diagram illustrating an example of a functional configuration of the welding line detection system;
FIG. 3 is a diagram illustrating an example of an object to be welded;
FIG. 4 is a diagram illustrating an example of a user coordinate system using a position of a marker as an origin;
FIG. 5 is a diagram illustrating another example of the object to be welded;
FIG. 6 is a diagram illustrating an example of point group data to be plotted in the user coordinate system; and
FIG. 7 is a flow chart for illustrating an example of an operation when the welding line detection system produces a work program.

### Detailed Description

Referring to the accompanying drawings, a description will be given of a preferred embodiment of the present invention. Note that, throughout the individual drawings, components denoted by the same reference signs have the same or similar configurations. In addition, since the drawings are schematic, dimensions or ratios of the individual components are different from those of real components.

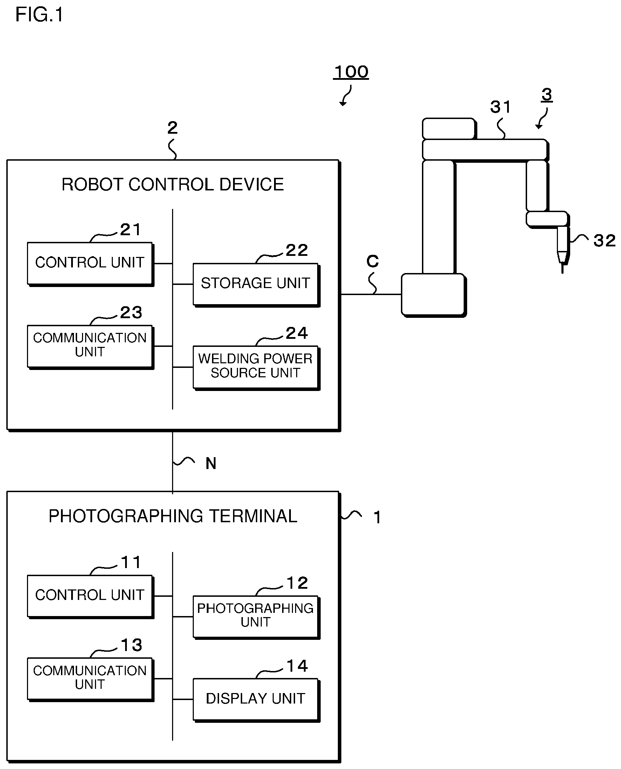

FIG. 1 is a diagram illustrating an example of a configuration of a welding line detection system including a welding program production system according to the embodiment. A welding robot system 100 includes, e.g., a photographing terminal 1, a robot control device 2, and a manipulator 3. The photographing terminal 1 and the robot control device 2 are connected via, e.g., a network N, while the robot control device 2 and the manipulator 3 are connected via, e.g., a communication cable C. The network N may be either wired (including the communication cable) or wireless. Note that the welding robot system 100 may also include a teaching pendant. The teaching pendant is an operating device to be used by a worker to teach an operation to be performed by the manipulator 3.

The manipulator 3 is a welding robot that performs arc welding according to execution conditions set in the robot control device 2. The manipulator 3 includes, e.g., a multi-junction arm 31 provided on a base member fixed to a floor surface or the like in a factory and a welding torch 32 connected to a leading end of the multi-junction arm 31.

The robot control device 2 is a control unit that controls an operation of the manipulator 3 and includes, e.g., a control unit 21, a storage unit 22, a communication unit 23, and a welding power source unit 24.

The control unit 21 controls the manipulator 3 and the welding power source unit 24 through, e.g., execution of a work program stored in the storage unit 22 by a processor.

The communication unit 23 controls communication with the photographing terminal 1 connected thereto via the network N and controls communication with the manipulator 3 connected thereto via the communication cable C.

The welding power source unit 24 supplies, according to welding execution conditions determined in advance, a welding current, a welding voltage, and the like to the manipulator 3 so as to, e.g., generate an arc between a leading end of the welding wire and a work. Examples of the welding execution conditions include data items such as welding conditions, a welding starting position, a welding ending position, an arc discharge period, a welding distance, a posture of the welding torch, and a moving speed of the welding torch. The welding power source unit 24 may also be provided separately from the robot control device 2.

The photographing terminal 1 is, e.g., a digital camera, but may also be a portable terminal with a digital camera. Examples of the portable terminal include transportable terminals such as a tablet terminal, a smartphone, a personal data assistant (PDA), and a notebook PC (personal computer). The photographing terminal 1 includes, e.g., a control unit 11, a photographing unit 12, a communication unit 13, and a display unit 14.

The control unit 11 controls each of the components of the photographing terminal 1 through execution of a predetermined program stored in a memory by the processor.

The photographing unit 12 includes, e.g., a lens and an image capturing element (image sensor) and converts light from a photographed object that has been received by the lens to an electric signal (digital image data).

The communication unit 13 controls communication with the robot control device 2 connected thereto via the network N.

The display unit 14 is, e.g., a display having a touch panel, and displays a screen image of the object photographed by the photographing unit 12, while receiving an input of an operation instruction from the worker or the like. The display unit 14 may also be provided as, e.g., a display device having a touch panel separately from the photographing terminal 1.

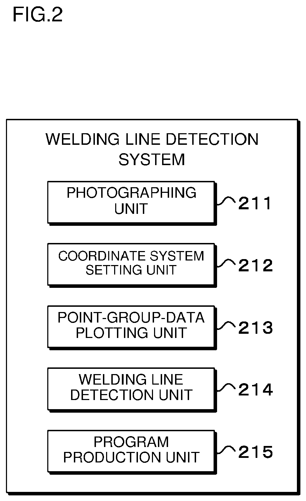

FIG. 2 is a diagram illustrating an example of a functional configuration of the welding line detection system according to the present invention. For example, the welding line detection system includes, as the functional configuration, a photographing unit 211, a coordinate system setting unit 212, a point-group-data plotting unit 213, a welding line detection unit 214, and a program production unit 215. Among these functions, the photographing unit 211 is the function included in the photographing terminal 1. Meanwhile, all of the coordinate system setting unit 212, the point-group-data plotting unit 213, the welding line detection unit 214, and the program production unit 215 may be included in either of the photographing terminal 1 and the robot control device 2, or the individual functions may also be distributed to the photographing terminal 1 and the robot control device 2 to be included therein. Alternatively, another device other than the photographing terminal 1 and the robot control device 2 may also include any or all of the functions described above.

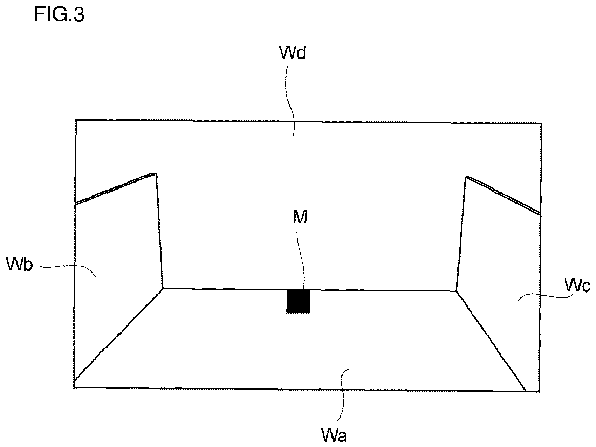

The photographing unit 211 is the same as the photographing unit 12 of the photographing terminal 1 described above. The photographing unit 211 according to the present embodiment photographs, as an object to be welded, a structure including, e.g., a plurality of iron plate members (works) each serving as an object to be arc-welded. FIG. 3 illustrates an example of the object to be welded. In FIG. 3, the structure including one work Wa serving as a bottom plate, two works Wb and Wc serving as side plates, and one work Wd serving as a rear plate is illustrated as the object to be welded. In a space formed by this structure, a marker M, which is described later, is placed.

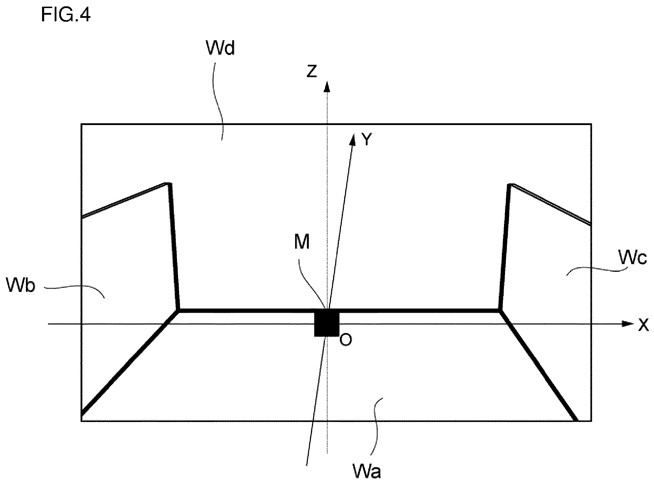

The coordinate system setting unit 212 illustrated in FIG. 2 sets a user coordinate system using, as an origin, a position of the marker M included in the screen image photographed by the photographing unit 211. FIG. 4 illustrates an example of the user coordinate system using the position of the marker as the origin. In FIG. 4, a three-dimensional orthogonal coordinate system using the position of the marker as an origin O and including an X-axis, a Y-axis, and a Z-axis which are perpendicular to each other at the origin O is illustrated as the user coordinate system.

Note that the origin of the user coordinate system may appropriately be set on the basis of the marker (such as, e.g., a corner of the marker or a center of the marker). The following is a reason for setting the origin of the user coordinate system on the basis or the marker instead of setting the origin of the user coordinate system on the basis of the photographing terminal 1. During photographing, the photographing terminal 1 is carried by the worker to move, and consequently it is difficult to specify a position of the photographing terminal 1 in a robot coordinate system. By contrast, the marker is fixedly disposed, and consequently it is relatively easy to specify the position of the marker in the robot coordinate system. As a result, when the user coordinate system is set on the basis of the marker, it is possible to more easily calibrate a positional relationship between the user coordinate system and the robot coordinate system than when the user coordinate system is set on the basis of the photographing terminal 1.

It is to be noted herein that the marker M may appropriately be an identifier capable of causing the photographing unit 211 to recognize that the marker M is placed in the space but, for example, an AR marker is used. By using the AR marker, when the AR marker placed in the space is recognized, the user coordinate system using the AR marker as the origin can easily be displayed in superimposed relation on a real screen image.

The user coordinate system based on the marker can be set by moving the origin of the camera coordinate system (e.g., a center of the lens) to the specific position of the marker described later. Such a user coordinate system can be set by applying, e.g., a known technique of setting a coordinate system of the AR marker.

The point-group-data plotting unit 213 illustrated in FIG. 2 acquires coordinate data (point group data) corresponding to an object to be welded, and plots the acquired coordinate data in the user coordinate system.

A specific description is as follows. The point-group-data plotting unit 213 detects the specific position of the marker (e.g., the corner of the marker or the center of the marker) on the basis of the image photographed by the photographing unit 211, sets the detected specific position of the marker on the point group data acquired by a distance measurement sensor described later, and plots, in the user coordinate system, the point group data to which coordinates of the user coordinate system using, as the origin, the set specific position of the marker are given. The specific position of the marker to be set on the point group data may be specified such that, e.g., the specific position of the marker on the point group data is automatically recognized by data analysis or the worker points the specific position of the marker on the point group data.

The coordinate data corresponding to the object to be welded can be acquired by, e.g., the distance measurement sensor. The distance measurement sensor may appropriately be a sensor capable of measuring a distance to the object to be welded. As the distance measurement sensor, e.g., a LiDAR (Light Detection and Ranging) sensor, a millimeter wave sensor, an ultrasonic wave sensor, or the like can be used. Alternatively, the coordinate data corresponding to the object to be welded may also be acquired by being arithmetically determined on the basis of a plurality of images obtained by photographing the object to be welded at a plurality of different positions. In this case, it is possible to use a three-dimensional measurement method based on a known stereo method.

It is to be noted herein that the distance measurement sensor may also be included in the photographing terminal 1. This allows a positional relationship between the image sensor and the distance measurement sensor to be fixed and allows the individual sensors to acquire data with the same timing. As a result, it is possible to improve efficiency of processing of setting the specific position of the marker descried above on the point group data. In addition, by providing the photographing terminal 1 with the image sensor and the distance measurement sensor, it becomes possible to allow the worker who operates the photographing terminal 1 to freely move to any position at which a welding line of the object to be welded and the marker can simultaneously be photographed and perform the photographing, which can increase work efficiency.

Furthermore, a sensor having a function of a sensor that photographs an image to acquire the image and a function of a sensor that measures a distance to acquire the distance may also be included in the photographing terminal 1. This allows an image including the object to be welded and a distance to the object to be welded to be obtained from the same place with the same timing, and therefore it is possible to further increase the efficiency of the processing of setting the specific position of the marker described above on the point group data.

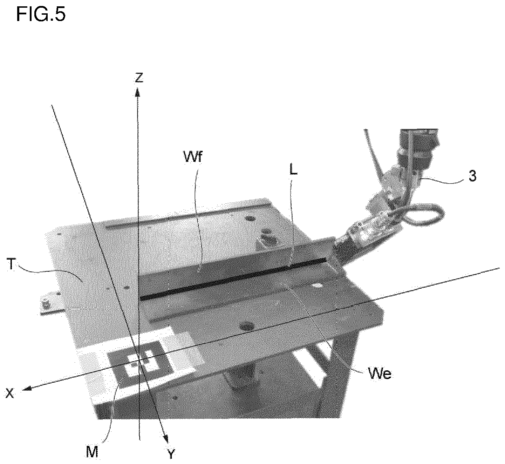

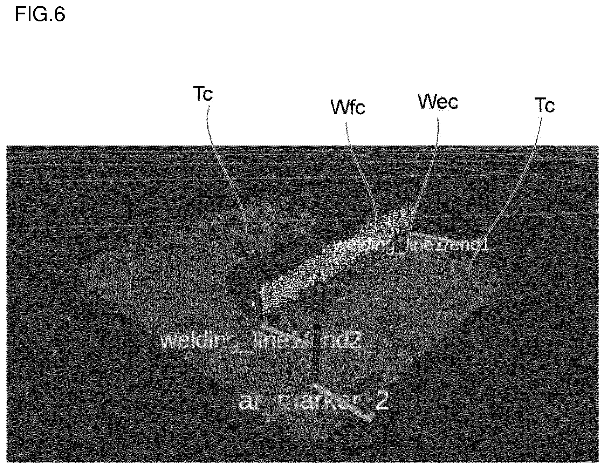

Referring to FIGS. 5 and 6, a description will be given of a concept of plotting, in the user coordinate system, the coordinate data corresponding to the object to be welded as the point group data.

FIG. 5 is a diagram illustrating an example of the object to be welded. In FIG. 5, the object to be welded that includes a work We placed on a work table T and a work Wf placed so as to have a substantially perpendicular relationship with the work We is illustrated by way of example. In the vicinity of the object to be welded, the marker M is placed.

FIG. 6 is a diagram illustrating an example of the point group data to be plotted in the user coordinate system. In FIG. 6, coordinate data Wec and coordinate data Wfc respectively corresponding to the work We and the work Wf in FIG. 5 and coordinate data Tc corresponding to the work table T in FIG. 5 are plotted as the point group data in the user coordinate system.

The welding line detection unit 214 illustrated in FIG. 2 detects the welding line of the object to be welded on the basis of the point group data plotted in the user coordinate system. Specifically, the welding line detection unit 214 recognizes, on the basis of the point group data, a plurality of planes corresponding to the object to be welded and detects, as the welding line, a line of intersection between two planes included in the plurality of planes. When there are a plurality of the combinations of the two planes, the welding line is detected for each of the combinations. For example, in FIG. 6, a plane represented by the coordinate data Wec corresponding to the work We and a plane represented by the coordinate data Wfc corresponding to the work Wf are recognized, and a line of intersection between these two planes is detected as the welding line. Thus, as illustrated in FIG. 5, a welding line L is detected as the line of intersection between the work Wf and the work We, and displayed in superimposed relation on the real screen image. Note that, when the welding line is to be detected, the line of intersection between the two planes is preferably detected from end to end as the welding line. When the welding line is to be detected, end points can be set on optional conditions.

It is to be noted herein that what is to be detected as the welding line is not limited to the line of intersection between the two planes. For example, it may also be possible to detect, as the welding line, a line of intersection between two surfaces.

When the line of intersection between the two planes is to be detected as the welding line, one or both of followings (1) and (2) may also be added to conditions when the welding line is detected.
(1) When the detected welding line has a length less than a specific length, the welding line is not used (the welding line is ignored).
(2) Both end portions of the detected welding line each having a predetermined length are excluded from the welding line (the portions of the welding line are ignored).

The program production unit 215 illustrated in FIG. 2 produces a work program to perform the arc welding on the basis of the welding line detected by the welding line detection unit 214. The program production unit 215 causes the storage unit 22 of the robot control device 2 to store the produced work program. As a result, when the manipulator 3 performs the arc welding, it is possible to control the manipulator 3 such that the control unit 21 of the robot control device 2 reads the work program, and the welding is performed along the welding line specified by the work program according to a welding procedure specified by the work program.

It is preferable herein that, when the work program is produced, the program production unit 215 performs calibration to, e.g., match the robot coordinate system set on the basis of the position of the manipulator 3 with the user coordinate system and specifies position information of the manipulator 3 or the like in the user coordinate system to allow a position in the user coordinate system to be associated with a position in the robot coordinate system.

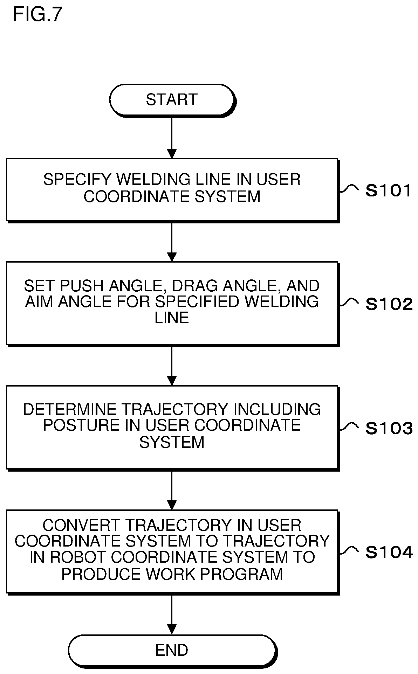

Referring to FIG. 7, an operation when the program production unit 215 produces the work program will be described.

First, the program production unit 215 specifies the welding line in the user coordinate system on the basis of the welding line detected by the welding line detection unit 214 (Step S101).

Subsequently, the program production unit 215 sets, for the welding line specified in Step S101 described above, the posture of the torch at a push angle of the torch, a drag angle of the torch, an aim angle of the torch, or the like is set (Step S102).

Subsequently, the program production unit 215 determines the trajectory including a posture of each of portions of the manipulator 3 in the user coordinate system (Step S103).

Subsequently, the program production unit 215 converts the trajectory in the user coordinate system determined in Step S103 described above to a trajectory in the robot coordinate system to produce the work program (Step S104). Then, the present operation is ended.

Each of the steps of the operation described above may be executed by either of the photographing terminal 1 and the robot control device 2, and it may be possible that some of the individual steps are executed by the photographing terminal 1, while some of the remaining steps are executed by the robot control device 2.

As described previously, with the welding line detection system according to the embodiment, it is possible to set the user coordinate system using the specific position of the marker as the origin on the basis of the image obtained by photographing the object to be welded and the marker placed in the space formed by the object to be welded, plot, in the user coordinate system, the point group data corresponding to the object to be welded, and detect the welding line of the object to be welded on the basis of the point group data. Consequently, even when the worker does not draw the welding line on the object to be welded, it is possible to allow the welding line of the object to be welded to be recognized.

Therefore, with the welding line detection system according to the embodiment, it is possible to increase efficiency of work to teach an operation to the manipulator 3 and improve a welding quality.

Additionally, by using a portable terminal as the photographing terminal 1 in the embodiment described above, the worker can photograph the object to be welded from any position to thus allow the welding line present at a position intended by the worker to be detected. When the position of the photographing terminal 1 is fixed, it follows that the welding line present in an area or a range that cannot be photographed from the fixed position cannot be detected, but welding work also includes such work as performed by the worker by crawling under the object to be welded. Therefore, by using the portable photographing terminal 1, e.g., by moving to, e.g., a position from which the welding line located under the object to be welded can be photographed and photographing the object, the worker can allow the welding line that cannot be detected by the photographing terminal 1 present at the fixed position to be detected.

### Modified Example

Note that the present invention is not limited to the embodiment described above, and can variously be carried out in various other forms within the scope of the invention as defined by the claims. Therefore, the embodiment described above is to be construed in all respects only as illustrative and not restrictive.

For example, the welding line detection unit 214 according to the embodiment described above detects the welding line of the object to be welded, but the welding line detection unit 214 may also detect candidates for the welding line. In this case, the welding line detection system preferably further includes a welding line selection unit that allows the worker to select, from among the detected candidates for the welding line, the welding line along which welding is to be actually performed. In addition, the program production unit 215 preferably produces the work program for performing the arc welding on the basis of the welding line selected by the welding line selection unit.

The control unit 11 of the photographing terminal 1 causes the display unit 14 to display the welding line detected by the welding line detection unit 214 in superimposed relation on the image photographed by the photographing unit 12. This allows the worker who operates the photographing terminal 1 to easily determine whether or not there is an undetected welding line, while viewing the display unit 14 of the photographing terminal 1. In other words, it is possible to provide the worker with effective information for allowing the worker to determine whether or not photographing is to be performed again using the photographing terminal 1.

## Claims

1. A welding line detection system comprising:
a photographing terminal (1) that is configured to photograph an image of an object to be welded;
**characterized by**
a coordinate system setting unit (212) that is configured to set a user coordinate system based on a marker included in the photographed image;
a point-group-data plotting unit (213) that is configured to detect a specific position of the marker on the basis of the image, and to set the detected specific position on point group data acquired by a distance measurement sensor that measures a distance to the object to be welded; and
a welding line detection unit (214) that is configured to detect, on the basis of the point group data plotted in the user coordinate system, a welding line of the object to be welded,
wherein the photographing terminal (1) includes an image sensor that is configured to photograph the image; and the distance measurement sensor,
wherein the point-group-data plotting unit (213) is configured to plot, in the user coordinate system, the point group data to which coordinates in the user coordinate system, using the set specific position as an origin, are given, and
the photographing terminal (1) further includes:
a display unit (14) that is configured to display the image; and
a control unit (11) that is configured to control a content to be displayed on the display unit (14), wherein
the control unit (11) is configured to cause the display unit (14) to display the welding line detected by the welding line detection unit (214), with the welding line being superimposed on the image.

2. The welding line detection system according to claim 1, wherein the welding line detection unit (214) is configured to recognize, on the basis of the point group data, a plurality of surfaces corresponding to the object to be welded, and to detect, as the welding line, a line of intersection between two surfaces included in the plurality of surfaces.

3. The welding line detection system according to claim 2, wherein the welding line detection unit (214) is configured to detect, as the welding line, at least a portion of the line of intersection between the two surfaces.

4. The welding line detection system according to claim 1 or 2, further comprising a program production unit (215) that is configured to produce a work program for performing welding on the basis of the welding line detected by the welding line detection unit (214).

5. The welding line detection system according to claim 1 or 2, wherein the marker is an AR marker.

## Patentansprüche

1. Schweißlinien-Detektionssystem, umfassend:
ein Fotografierendgerät (1), das konfiguriert ist, um ein Bild eines zu schweißenden Objekts zu fotografieren;
**gekennzeichnet durch**
eine Koordinatensystem-Einstelleinheit (212), die konfiguriert ist, um ein Benutzerkoordinatensystem basierend auf einer Markierung einzustellen, die in dem fotografierten Bild enthalten ist;
eine Punktgruppendaten-Auftragseinheit (213), die konfiguriert ist, um eine spezifische Position der Markierung auf der Basis des Bildes zu detektieren, und um die detektierte spezifische Position auf Punktgruppendaten einzustellen, die durch einen Abstandsmesssensor erfasst werden, der einen Abstand zu dem zu schweißenden Objekt misst; und
eine Schweißlinien-Detektionseinheit (214), die konfiguriert ist, um auf der Basis der Punktgruppendaten, die in dem Benutzerkoordinatensystem aufgetragen sind, eine Schweißlinie des zu schweißenden Objekts zu detektieren,
wobei das Fotografierendgerät (1) einen Bildsensor, der konfiguriert ist, um das Bild zu fotografieren; und den Abstandsmesssensor umfasst,
wobei die Punktgruppendaten-Auftragseinheit (213) konfiguriert ist, um in dem Benutzerkoordinatensystem die Punktgruppendaten aufzutragen, denen Koordinaten in dem Benutzerkoordinatensystem unter Verwendung der eingestellten spezifischen Position als Ursprung gegeben sind, und
das Fotografierendgerät (1) ferner umfasst:
eine Anzeigeeinheit (14), die konfiguriert ist, um das Bild anzuzeigen; und
eine Steuereinheit (11), die konfiguriert ist, um einen Inhalt zu steuern, der auf der Anzeigeeinheit (14) angezeigt werden soll, wobei
die Steuereinheit (11) konfiguriert ist, um die Anzeigeeinheit (14) zu veranlassen, die Schweißlinie anzuzeigen, die durch die Schweißlinien-Detektionseinheit (214) detektiert wird, wobei die Schweißlinie auf dem Bild überlagert ist.

2. Schweißlinien-Detektionssystem nach Anspruch 1, wobei die Schweißlinien-Detektionseinheit (214) konfiguriert ist, um auf der Basis der Punktgruppendaten eine Vielzahl von Flächen zu erkennen, die dem zu schweißenden Objekt entsprechen, und um als die Schweißlinie eine Schnittlinie zwischen zwei Flächen zu detektieren, die in der Vielzahl von Flächen enthalten sind.

3. Schweißlinien-Detektionssystem nach Anspruch 2, wobei die Schweißlinien-Detektionseinheit (214) konfiguriert ist, um als die Schweißlinie mindestens einen Abschnitt der Schnittlinie zwischen den zwei Flächen zu detektieren.

4. Schweißlinien-Detektionssystem nach Anspruch 1 oder 2, ferner umfassend eine Programmerzeugungseinheit (215), die konfiguriert ist, um ein Arbeitsprogramm zum Durchführen des Schweißens auf der Basis der von der Schweißlinien-Detektionseinheit (214) detektierten Schweißlinie zu erzeugen.

5. Schweißlinien-Detektionssystem nach Anspruch 1 oder 2, wobei die Markierung eine AR-Markierung ist.

## Revendications

1. Système de détection de ligne de soudage comprenant :
un terminal de photographie (1) qui est configuré pour photographier une image d'un objet à souder ;
**caractérisé par**
une unité de définition de système de coordonnées (212) qui est configurée pour définir un système de coordonnées d'utilisateur sur la base d'un marqueur inclus dans l'image photographiée ;
une unité de traçage de données de groupe de points (213) qui est configurée pour détecter une position spécifique du marqueur sur la base de l'image, et pour définir la position spécifique détectée sur des données de groupe de points acquises par un capteur de mesurage de distance qui mesure une distance jusqu'à l'objet à souder ; et
une unité de détection de ligne de soudage (214) qui est configurée pour détecter, sur la base des données de groupe de points tracées dans le système de coordonnées d'utilisateur, une ligne de soudage de l'objet à souder ;
dans lequel le terminal de photographie (1) inclut un capteur d'image qui est configuré pour photographier l'image ; et le capteur de mesurage de distance,
dans lequel l'unité de traçage de données de groupe de points (213) est configurée pour tracer, dans le système de coordonnées d'utilisateur, les données de groupe de points dont les coordonnées dans le système de coordonnées d'utilisateur, en utilisant la position spécifique définie comme origine, sont données, et
le terminal de photographie (1) inclut en outre :
une unité d'affichage (14) qui est configurée pour afficher l'image ; et
une unité de commande (11) qui est configurée pour commander un contenu à afficher sur l'unité d'affichage (14), dans lequel
l'unité de commande (11) est configurée pour amener l'unité d'affichage (14) à afficher l'unité de soudage détectée par l'unité de détection de ligne de soudage (214), la ligne de soudage étant superposée sur l'image.

2. Système de détection de ligne de soudage selon la revendication 1, dans lequel l'unité de détection de ligne de soudage (214) est configurée pour reconnaître, sur la base des données de groupe de points, une pluralité de surfaces correspondant à l'objet à souder, et pour détecter, à titre de ligne de soudage, une ligne d'intersection entre deux surfaces incluses dans la pluralité de surfaces.

3. Système de détection de ligne de soudage selon la revendication 2, dans lequel l'unité de détection de ligne de soudage (214) est configurée pour détecter, à titre de ligne de soudage, au moins une portion de la ligne d'intersection entre les deux surfaces.

4. Système de détection de ligne de soudage selon la revendication 1 ou 2, comprenant en outre une unité de production de programme (215) qui est configurée pour produire un programme de travail destiné à effectuer un soudage sur la base de la ligne de soudage détectée par l'unité de détection de ligne de soudage (214).

5. Système de détection de ligne de soudage selon la revendication 1 ou 2, dans lequel le marqueur est un marqueur AR.
